Europäisches Patentamt

European Patent Office

Office européen des brevets

(19)

(11) Veröffentlichungsnummer : **0 177 694**
**B1**

(12)

# EUROPÄISCHE PATENTSCHRIFT

(45) Veröffentlichungstag der Patentschrift :
23.11.89

(51) Int. Cl.⁴ : **C 08 G 69/44, C 09 J 3/16**

(21) Anmeldenummer : 85109488.8

(22) Anmeldetag : 27.07.85

(54) Verwendung von Blockcopolyesteramiden als Textilschmelzkleber.

(30) Priorität : 25.09.84 DE 3435053

(43) Veröffentlichungstag der Anmeldung :
16.04.86 Patentblatt 86/16

(45) Bekanntmachung des Hinweises auf die Patenterteilung : 23.11.89 Patentblatt 89/47

(84) Benannte Vertragsstaaten :
AT BE CH DE FR GB IT LI NL SE

(56) Entgegenhaltungen :
EP–A– 0 025 828
EP–A– 0 042 008
DE–A– 3 247 755
US–A– 3 849 514
US–A– 4 217 435

(73) Patentinhaber : HÜLS AKTIENGESELLSCHAFT
- RSP Patente / PB 15 - Postfach 13 20
D-4370 Marl 1 (DE)

(72) Erfinder : Bax, Hanns-Jörg, Dr.
Lipper Weg 193
D-4370 Marl (DE)
Erfinder : Horlbeck, Gernot, Dr.
Huels Corporation Turner Place P.O. Box 365
Piscataway New Jersey 08854 (US)
Erfinder : Feldmann, Rainer, Dr.
Leverkusener Strasse 27
D-4370 Marl (DE)
Erfinder : Mumcu, Salih, Dr.
Leverkusener Strasse 12
D-4370 Marl (DE)

EP 0 177 694 B1

## Beschreibung

Copolyesteramide als Schmelzkleber sind grundsätzlich bekannt. Abhängig von der Zusammensetzung und der Art der Herstellung sind sie in ihren Eigenschaften so verschieden, daß sie für die Verwendung als Textilschmelzkleber noch notwendigerweise einer Verbesserung bedürfen.

Textilschmelzkleber, die Polyesteramide enthalten, welche nach dem Verfahren der deutschen Patentschrift 25 42 467 erhalten wurden, haben den Nachteil, daß die Lactamspaltung hydrolytisch unter Druck und nicht acidolytisch durchgeführt wird. Die Polyamidblöcke haben niedrige Sequenzlängen, $\overline{M}_n < 1\,000$, so daß bei gleichen Polyamidanteilen die Schmelzpunkte erniedrigt sind. Es liegen stastistisch verteilte Polyesteramide vor. Diese Polyesteramide haben eine ungenügende Reinigungsbeständigkeit. Schließlich enthalten Polyesteramide dieses Standes der Technik ausdrücklich kein Butandiol, und sie unterscheiden sich schließlich durch die Art der Herstellung, da nach diesem Verfahren des Standes der Technik keine Polyestertechnik, sondern Polyamidtechnik angewendet wird.

Die US-Patentschrift 3 849 514 gibt die Lehre zur Herstellung von Blockcopolyesteramiden ausgehend von Oligoamiden mit Ester- oder Hydroxyesterendgruppen und Oligopolyestern mit Hydroxyendgruppen. Es wird auch die Verwendung derartiger Blockcopolyesteramide als Schmelzkleber empfohlen. Sie sind jedoch wegen ihres hohen Schmelzpunktes nicht als Textilschmelzkleber geeignet, derartige Produkte haben zwei Schmelzpunkte und sind, wenn überhaupt, nur schwierig als Schmelzkleber zu verarbeiten. Außerdem ist eine aufwendige Herstellungsmethode notwendig, wegen der Verwendung von Diaminen.

Aus der europäischen Patentanmeldung A1 089 846 sind Blockcopolyesteramide bekannt geworden, welche im Polyamidteil Piperazin und aromatische Dicarbonsäure, wie Terephthalsäure enthalten und im Polyesterteil ebenfalls als Dicarbonsäure Terephthalsäure enthalten. Auch derartige Schmelzkleber sind wegen ihres hohen Schmelzpunktes nicht als Textilschmelzkleber geeignet.

Die Copolyesteramid-Formmassen, die in der europäischen Patentanmeldung 09 937 beschrieben sind, enthalten neben hochschmelzenden Copolyesteramiden mit einem Schmelzpunkt oberhalb 150 °C notwendigerweise zusätzlich Aluminiumpulver und Glasfasern. Derartige Mischungen scheiden als Textilschmelzkleber aus, da die Stoffe durch die hohen Verklebungstemperaturen thermisch geschädigt werden.

Aus der US-PS 4 217 435 sind Mischungen bekannt aus Polyestern und Polyamiden, die als Schmelzkleber verwendet werden. Die Mischungen werden durch Schmelzmischen erhalten. Daraus auf üblichem Wege hergestellte Schmelzkleberpulver haben andere Eigenschaften als in ihrer Zusammensetzung vergleichbare Copolyesteramide. Die Lehre dieser Patentschrift kann demnach nicht dazu beitragen, ausgewählte Copolyesteramide als Textilschmelzkleber zu entwickeln.

Aus der europäischen Patentanmeldung 042 008 sind polyesteramide bekannt, die im Polyesterteil Benzoldicarbonsäuren und 1,4-Butandiol und im polyamidteil ω-Undecan- bzw. ω-Dodecansäureanteile enthalten. Nach dieser Arbeitsweise werden die Polyamidkomponenten als Monomere eingesetzt, was zu einer statistischen Verteilung dieser Komponenten in den daraus hergestellten Polyesteramiden führt. Diese Produkte zeigen bei ihrer Verwendung als Textilschmelzkleber eine ungenügende Beständigkeit gegenüber der chemischen Reinigung. Sie unterscheiden sich auch dadurch, daß sie kein Hexandiol enthalten ; sie sind daher weniger kristallin und klebrig und daher nicht nach dem Pulverpunktverfahren verarbeitbar. Statistisch verteilte Copolyesteramide haben gegenüber den Blockcopolyesteramiden der Erfindung bei gleichem Polyamidanteil geringere Reinigungsbeständigkeit.

Aufgabe der Erfindung ist es, Textilschmelzkleber mit guter Waschlaugen- und Reinigungsbeständigkeit bereitzustellen, die die genannten Nachteile nicht aufweisen und mit denen insbesondere temperaturempfindliche Textilien verklebt werden können.

Die Lösung der Aufgabe gelingt, wenn man als Textilschmelzkleber Blockcopolyesteramide verwendet, die Schmelzpunkte von 80 bis 135 °C besitzen und in einer 0,23 %igen Lösung aus 60 Gewichtsteilen Phenol und 40 Gewichtsteilen 1.1.2.2-Tetrachlorethan bei 25 °C eine Lösungsviskosität J von 60 bis 120 ml/g aufweisen und die erhalten wurden durch Polykondensation von

A 60 bis 95 Gewichtsprozent eines Blockpolyesters mit Hydroxyendgruppen, enthaltend als Säureteil mindestens 50 Mol-% Terephthalsäure und 0 bis 50 Mol-% mindestens einer weiteren aromatischen oder aliphatischen Dicarbonsäure und entsprechend als Alkoholteil 40 bis 90 Mol-% 1,4-Butandiol und 60 bis 10 Mol-% 1,6-Hexandiol, wobei ggf. bis zu 10 Mol-%, bezogen auf Hexandiol-1,6, durch längerkettige aliphatische Diole ersetzt sind und

B 40 bis 5 Gewichtsprozent einer Blockpolyamiddicarbonsäure, erhalten aus ω-Aminocarbonsäuren oder Lactamen mit 6 bis 12 Kohlenstoffatomen oder deren Gemischen und einer aliphatischen oder aromatischen Dicarbonsäure, mit einem Molgewicht Mn von 1 000 bis 8 000. Vorzugsweise beträgt der Polyamidanteil B 10 bis 30, insbesondere 20 bis 30 Gewichtsprozent und entsprechend der Polyesteranteil A 90 bis 70, insbesondere 80 bis 70 Gewichtsprozent.

Im Polyesteranteil besteht die Säurekomponente mindestens zu 50, vorzugsweise zu 60, insbesondere zu 70 Mol-% aus Terephthalsäure. Als weitere Dicarbonsäuren können aliphatische Dicarbonsäuren mit bis zu 14 Kohlenstoffatomen, wie Adipinsäure, Dodecandisäure, vorzugsweise Dodecandisäure, aromatische Dicarbonsäuren mit 8 bis 12 Kohlenstoffatomen, wie Phthalsäure, Isophthalsäure, 2,6-Naphthalindicarbonsäure, vorzugsweise Phthalsäure und Isophthalsäure, insbesondere Isophthalsäure verwendet werden. Es können auch Gemische der Dicarbonsäuren eingesetzt werden ; vorzugsweise werden jedoch diese Dicarbonsäuren einzeln verwendet.

Die Alkoholkomponente besteht zu 90 bis 40, insbesondere 80 bis 50 Mol-% aus 1,4-Butandiol und entsprechend zu 10 bis 60, insbesondere zu 20 bis 50 Mol-% aus 1,6-Hexandiol, wobei ggf. bis zu 10 Mol-%, bezogen auf Hexandiol-1,6, durch ein anderes längerkettiges aliphatisches Diol ersetzt sind, beispielsweise Octandiol-1,8, Dodecandiol-1,12. Vorzugsweise wird Hexandiol-1,6 allein eingesetzt.

Die Oligoamiddicarbonsäuren werden aus ω-Aminocarbonsäuren mit 6 bis 12 Kohlenstoffatomen und/oder den entsprechenden Lactamen und aliphatischen oder aromatischen Dicarbonsäuren erhalten. Die Oligoamidcarbonsäuren sollen ein mittleres Molgewicht $M_n$ von 1 000 bis 8 000, vorzugsweise 2 000 bis 6 000, insbesondere 2 000 bis 5 600 besitzen.

Vorzugsweise werden als Lactame bzw. ω-Aminocarbonsäure Laurinlactam und/oder ω-Aminoundecansäure verwendet. Auch Caprolactam, Capryllactam oder andere polyamidbildende Bausteine können ggf. im Gemisch mit Laurinlactam oder Aminoundecansäure verwendet werden. Vorzugsweise wird Laurinlactam allein oder gemeinsam mit Caprolactam eingesetzt, wobei der Caprolactamanteil in diesem Gemisch vorzugsweise 40 bis 20, insbesondere 25 bis 20 Gewichtsprozent beträgt. Grundsätzlich können als Dicarbonsäuren die zuvor genannten aliphatischen der aromatischen Dicarbonsäuren verwendet werden.

Bevorzugte Dicarbonsäuren sind Dodecandisäure, Terephthalsäure und Isophthalsäure.

Die Oligoamiddicarbonsäuren können gesondert hergestellt und zerkleinert, für den Blockcopolyesteramid-Ansatz eingesetzt oder aber unmittelbar mit dem Polyestervorkondensat vermischt und zum Blockcopolyesteramid kondensiert werden.

Für die Herstellung dieser Blockcopolyesteramide verfährt man nach der allgemeinen Polyestertechnologie. Man stellt zunächst bei 190 bis 220 °C unter Stickstoff ein Polyestervorkondensat durch Umesterung von Dicarbonsäuredimethylestern mit den Diolen und ggf. durch Veresterung von außerdem vorhandenen Dicarbonsäuren mit den Diolen her. Dieses Produkt wird dann mit einer Oligoamiddicarbonsäure mit $M_n$ = 1 000 bis 8 000, die aus einer Dicarbonsäure und einem Lactam oder einer ω-Aminocarbonsäure hergestellt werden kann, vermischt und anschließend bei weiter erhöhter Temperatur unter Vakuum von < 20 mbar zum Blockcopolyesteramid polykondensiert.

Die Schmelzpunkte der Blockcopolyesteramide liegen im Bereich von 80 bis 135 °C. Bei Schmelzpunkten unterhalb 80 °C ist die Reinigungs- und Waschfestigkeit zu gering. Bei Schmelzpunkten oberhalb 135 °C sind sie zum Verkleben von empfindlichen Textilien nicht geeignet. Mit zunehmender Viskosität steigen die Werte für die Hydrolyse- und Reinigungsbeständigkeit der Blockcopolyesteramide. Die Lösungsviskosität J sollte mindestens 60 ml/g betragen, oberhalb 90 ml/g werden die Produkte so zäh, daß die Verarbeitung zu Pulver und das Verkleben der Textilien erschwert werden. Vorzugsweise liegen die Werte für die Lösungsviskosität im Bereich von 60 bis 85 ml/g.

Die Lösungsviskosität wird gemessen in einer 0,23 %igen Lösung aus 60 Gewichtsteilen Phenol und 40 Gewichtsteilen 1.1.2.2-Tetrachlorethan bei 25 °C.

Die Blockcopolyesteramide können übliche Zusatzstoffe, wie Pigmente, Nukleierungsmittel, Stabilisatoren, Reduktionsmittel und optische Aufheller als Farbverbesserer enthalten.

Vor dem Einsatz als Textilkleber werden die Produkte üblicherweise gemahlen. Die Pulver können dann bei Korngrößen von < 80 μm als Pasten, bei Korngrößen von 80 bis 300 μm nach dem Pulverpunktverfahren auf Gewebe aufgetragen werden. Die Verklebung eines textilkleberhaltigen Gewebes mit einem anderen Gewebe wird im allgemeinen mit Hilfe von Pressen bei 130 bis 170 °C durchgeführt.

<div align="center">Beispiele</div>

A Herstellung der Oligoamiddicarbonsäuren

Oligoamiddicarbonsäure

9,3 kg Laurinlactam und 1,2 kg Dodecandisäure werden bei 280 °C unter Stickstoff 4 Stunden gerührt. Das so hergestellte Produkt ist Oligoamiddicarbonsäure I ($M_n$ = 2010).

Oligoamiddicarbonsäure II

10,0 kg Laurinlactam und 600 g Dodecandisäure werden bei 285 °C unter Stickstoff 12 Stunden gerührt. Dabei entsteht Oligoamiddicarbonsäure II ($M_n$ = 4060).

Oligoamiddicarbonsäure III

10,0 kg Laurinlactam und 600 g Terephthalsäure werden bei 285 °C unter Stickstoff 12 Stunden gerührt. Es bildet sich Oligoamiddicarbonsäure III ($M_n$ = 2930).

<div align="center">3</div>

Oligoamiddicarbonsäure IV

16,2 kg Laurinlactam, 500 g Terephthalsäure und 10 g Phosphorsäure werden bei 280 °C in 6 Stunden zu Oligoamiddicarbonsäure IV ($M_n = 5540$) umgesetzt.

B Herstellung der Blockcopolyesteramide

## Beispiel 1

15,52 kg Terephthalsäuredimethylester, 2,34 kg Isophthalsäure, 8,82 kg 1,4-Butandiol und 4,96 kg 1,6-Hexandiol werden unter Katalyse von 5 g Titantetraisopropylat in 3 Stunden bei 200 °C unter Stickstoff umgeestert bzw. verestert. Das resultierende Polyestervorkondensat wird anschließend bei 200°C mit 2,36 kg Oligoamiddicarbonsäure I vermischt. Nach Zusatz von 5 g Titantetraisopropylat wird auf 240 °C erhitzt und dann in 2 Stunden bei 240 °C unter einem Druck von 1 mbar polykondensiert. Die Zusammensetzung des dabei gebildeten Blockcopolyesteramids geht aus Tabelle 1 hervor.

## Beispiele 2 bis 6

Es wurde wie in Beispiel 1 verfahren.
Die Zusammensetzung der hergestellten Blockcopolyesteramide geht aus Tabelle 1 hervor.

(Siehe Tabelle 1 Seite 5 f.)

4

Tabelle 1

| Beispiel | Polyesterteil | | | | | Polyamidteil | | Lösungsviskosität J $[ml/g]$ | Schmelzpunkt °C (DSC) |
|---|---|---|---|---|---|---|---|---|---|
| | Masse-% des BPE | Mol-% | | | | Masse-% des BPA | Oligoamiddicarbonsäure | | |
| | | TS | IS | B1D | HD | | | | |
| 1 | 90 | 85 | 15 | 70 | 30 | 10 | I | 73 | 128 |
| 2 | 75 | 85 | 15 | 80 | 20 | 25 | I | 70 | 127 |
| 3 | 80 | 85 | 15 | 50 | 50 | 20 | II | 68 | 102 |
| 4 | 80 | 70 | 30 | 80 | 20 | 20 | I | 72 | 113 |
| 5 | 70 | 90 | 10 | 60 | 40 | 30 | III | 63 | 120 |
| 6 | 70 | 90 | 10 | 70 | 30 | 30 | IV | 69 | 127 |
| Vergl.-beispiel | | | | | | | | | |
| A | 70 | 90 | 10 | 100 | – | 30 | III | 65 | 168 |
| B | 70 | 50 | 50 | 100 | – | 30 | III | 67 | 105 |
| C | 70 | 90 | 10 | 60 | 40 | 30 | $\omega$-Aminododecansäure | 70 | 100 |
| D | 70 | 90 | 10 | 60 | 40 | 30 | Oligoamiddicarbonsäure mit $M_n$ = 800 | 63 | 104 |
| E | 40 | 80 | 20 | 60 | 40 | 60 | I | 69 | 128 |

EP 0 177 694 B1

Erläuterungen der Abkürzungen :

BPE = Blockcopolyester mit Hydroxyendgruppen (A)
BPA = Blockpolyamiddicarbonsäure (B)
TS = Terephthalsäure
IS = Isophthalsäure
B1D = 1,4-Butandiol
HD = 1,6-Hexandiol
DSC = Difference Scanning Calorimetry (Anal. Chem. Bd. 36, Seite 1238 [1964])

Von den zu Pulver verarbeiteten Produkten der Tabelle 1 wurden auf einen Einlagenstoff (100 % Baumwolle) etwa 20 g/m² mit Hilfe einer Pulverpunktmaschine aufgetragen. Dieser Baumwollstoff wurde dann mit einem Oberstoff (45 % Wolle, 55 % Polyester) durch 15 sekundenlanges Pressen bei einem Druck von 3 N/cm² und einer Fugentemperatur von 135 °C verklebt. Nach dem Verkleben, nach 3 maligem Waschen bei 60 °C mit einem handelsüblichen Waschmittel und nach 5 maliger Reinigung mit Perchlorethylen wurde die Trennfestigkeit bestimmt.

Tabelle 2

| Beispiel | Trennfestigkeit N/5 cm | | |
| --- | --- | --- | --- |
| | nach der Verklebung | nach 3 x Waschen | nach 5 x Reinigung |
| 1 | 17 | 14 | 13 |
| 2 | 18 | 15 | 15 |
| 3 | 17 | 14 | 14 |
| 4 | 18 | 15 | 15 |
| 5 | 18 | 15 | 14 |
| 6 | 17 | 15 | 15 |
| Vergl.-beispiel | | | |
| A | keine Verklebung (zu hoher Schmelzpunkt) | | |
| B* | 17 | 15 | 12 |
| C | 18 | 14 | 10 |
| D | 17 | 12 | 11 |
| E | 15 | 9 | 12 |

B* Pulver klumpt und klebt auf der Walze der Pulverpunktmaschine

Die Vergleichsbeispiele A und B zeigen, daß in Abwesenheit von Hexandiol keine brauchbaren Produkte erhalten werden. Vergleichsbeispiel C, mit monomerer ω-Aminodocecansäure hergestellt, ergibt ein niedrigschmelzendes klebriges Produkt mit statistischer Verteilung der Komponenten, also kein Blockcopolyesteramid. Vergleichsbeispiel D verdeutlicht, daß die Oligoamiddicarbonsäure ein mittleres Molgewicht von ⩾ Mn 1 000 besitzen muß und Vergleichsbeispiel E, daß der Anteil der Oligoamiddicarbonsäure nicht über 40 Gewichtsprozent (Masseprozent) liegen darf.

**Patentansprüche**

1. Verwendung von Blockcopolyesteramiden mit Schmelzpunkten von 80 bis 135 °C und einer Lösungsviskosität J von 60 bis 120 ml/g, gemessen bei 25 °C in einer 0,23 %igen Lösung aus 60 Gewichtsteilen Phenol und 40 Gewichtsteilen 1.1.2.2-Tetrachlorethan, welche erhalten worden sind durch Polykondensation von

A 60 bis 95 Gewichtsprozent eines Blockpolyesters mit Hydroxyendgruppen, enthaltend als Säureteil mindestens 50 Mol-% Terephthalsäure und 0 bis 50 Mol-% mindestens einer weiteren Dicarbonsäure und entsprechend als Alkoholteil 40 bis 90 Mol-% 1,4-Butandiol und 60 bis 10 Mol-% 1,6 Hexandiol, wobei ggf. bis zu 10 Mol-%, bezogen auf Hexandiol-1,6, durch längerkettige aliphatische Diole ersetzt sind und

B 40 bis 5 Gewichtsprozent einer Blockpolyamiddicarbonsäure,
erhalten aus ω-Aminocarbonsäuren oder Lactamen mit 6 bis 12 C-Atomen oder deren Gemischen und aromatischen oder aliphatischen Dicarbonsäuren mit einem mittleren Molgewicht $M_n$ von 1 000 bis 8 000, als Textilschmelzkleber.

2. Verwendung von Blockcopolyesteramiden als Textilschmelzkleber nach Anspruch 1, dadurch gekennzeichnet, daß Polyesteranteil A 90 bis 70 Gewichtsprozent und der Polyamidanteil B 20 bis 30 Gewichtsprozent beträgt.

3. Verwendung von Blockcopolyesteramiden als Textilschmelzkleber nach Anspruch 1, dadurch gekennzeichnet, daß der Polyesteranteil A 80 bis 70 Gewichtsprozent und der Polyamidanteil B 20 bis 30 Gewichtsprozent beträgt.

4. Verwendung von Blockcopolyesteramiden als Textilschmelzkleber nach den Ansprüchen 1 bis 3, dadurch gekennzeichnet, daß der Säureteil der Komponente A zu 70 Mol-% aus Terephthalsäure und der Alkoholteil zu 80 bis 50 Mol-% aus 1,4-Butandiol und zu 20 bis 50 Mol-% aus 1,6-Hexandiol besteht.

## Claims

1. The use as hot melt adhesives for textiles of block copolyesteramides with melting points from 80 to 135 °C and a solution viscosity J from 60 to 120 ml/g, measured at 25 °C in a 0.23 % strength solution of 60 parts by weight of phenol and 40 parts by weight of 1,1,2,2-tetrachloroethane, which have been obtained by polycondensation of

A 60 to 95 percent by weight of a block polyester having hydroxyl terminal groups, containing as the acid component at least 50 mol % of terephthalic acid and 0 to 50 mol % of at least one other dicarboxylic acid and correspondingly as the alcohol component 40 to 90 mol % of 1,4-butanediol and 60 to 10 mol % of 1,6-hexanediol, in which if desired up to 10 mol %, based on the 1,6-hexanediol, are replaced by aliphatic diols of longer chain length, and

B 40 to 5 percent by weight of a block polyamidedicarboxylic acid,
obtained from ω-aminocarboxylic acids or lactams having 6 to 12 C atoms or mixtures thereof and aromatic or aliphatic dicarboxylic acids, having an average molecular weight $M_n$ from 1 000 to 8 000.

2. The use of block copolyesteramides as hot melt adhesives for textiles according to claim 1, characterized in that the polyester component A is 90 to 70 percent by weight and the polyamide component B is 20 to 30 percent by weight.

3. The use of block copolyesteramides as hot melt adhesives for textiles, according to claim 1, characterized in that the polyester component A is 80 to 70 percent by weight and the polyamide component B is 20 to 30 percent by weight.

4. The use of block copolyesteramides as hot melt adhesives for textiles, according to any of claims 1 to 3, characterized in that the acid part of the component A is composed to the extent of 70 mol % of terephthalic acid and the alcohol part is composed to the extent of 80 to 50 mol % of 1,4-butanediol and to the extent of 20 to 50 mol % of 1,6-hexanediol.

## Revendications

1. L'utilisation, comme adhésifs fusibles pour textiles, de copolyester-amides en masse présentant des points de fusion de 80 à 135 °C et une viscosité J en solution de 60 à 120 ml/g, mesurée à 25 °C dans une solution à 0,23 % obtenue à partir de 60 parties en poids de phénol et de 40 parties en poids de 1,1,2,2-tétrachloréthane, et qui ont été obtenus en soumettant à une polycondensation :

A) de 60 à 95 % en poids d'un polyester en masse comportant des groupes hydroxyle terminaux, renfermant comme partie acide au moins 50 mol-% d'acide téréphtalique et de zéro à 50 mol-% au moins d'un autre acide dicarboxylique et de façon correspondante, comme partie alcool, de 40 à 90 mol-% de 1,4-butane-diol et de 60 à 10 mol-% de 1,6-hexane-diol, tandis que jusqu'à 10 mol-%, relativement à l'hexane-diol-1,6, sont éventuellement remplacés par des diols aliphatiques à plus longue chaîne, et

B) de 40 à 5 % en poids d'un acide polyamide en masse-dicarboxylique,
obtenu à partir d'acides oméga-amino-carboxyliques ou de lactames comportant de 6 à 12 atomes de carbone, ou de leurs mélanges, et d'acides dicarboxyliques aromatiques ou aliphatiques possédant un poids moléculaire moyen $M_n$ de 1 000 à 8 000.

2. L'utilisation de copolyester-amides en masse comme adhésifs fusibles pour textiles, selon la revendication 1, caractérisée par le fait que la fraction polyester A est de 90 à 70 % en poids et que la fraction polyamide B est de 20 à 30 % en poids.

3. L'utilisation de copolyester-amides en masse, en tant qu'adhésifs fusibles pour textiles, selon la revendication 1, caractérisée par le fait que la fraction polyester A est de 90 à 70 % en poids et que la fraction polyamide B est de 20 à 30 % en poids.

4. L'utilisation de copolyester-amides en masse, en tant qu'adhésifs fusibles pour textiles, selon les revendications 1 à 3, caractérisée par le fait que la fraction acide du composant A est constituée, jusqu'à 70 mol-%, par de l'acide téréphtalique et que la fraction alcoolique est constituée, pour 80 à 50 mol-% par du 1,4-butane-diol et pour 20 à 50 mol-% par du 1,6-hexane-diol.